# EUROPÄISCHE PATENTSCHRIFT

(11) **EP 2 943 652 B1**
(45) Veröffentlichungstag und Bekanntmachung des Hinweises auf die Patenterteilung: **15.06.2016**
(21) Anmeldenummer: 14700833.8
(22) Anmeldetag: 10.01.2014
(51) Int. Cl.: B23P 6/00, F01D 5/00, B23Q 3/06

(54) **VORRICHTUNG ZUM EINSPANNEN EINER TURBINENSCHAUFEL**
DEVICE FOR CLAMPING A TURBINE BLADE
DISPOSITIF DE SERRAGE D'UNE AUBE DE TURBINE

(30) Priorität: 14.01.2013 EP 13151147
(43) Veröffentlichungstag der Anmeldung: 18.11.2015
(73) Patentinhaber: Siemens Aktiengesellschaft, 80333 München (DE)
(72) Erfinder: ARJAKINE, Nikolai, 10555 Berlin (DE); BURBAUM, Bernd, 14612 Falkensee (DE); KALOCSAY, Roman, 52074 Aachen (DE); MEHLHORN, Andre, 12305 Berlin (DE)
(86) Internationale Anmeldenummer: PCT/EP2014/050364
(87) Internationale Veröffentlichungsnummer: WO 2014/108495

(56) Entgegenhaltungen:
- EP-A1- 2 228 170
- DE-A1- 4 237 052
- DE-A1- 10 026 829
- FR-A1- 2 956 996
- JP-A- H10 180 442
- MX-A- 9 606 054
- US-A- 3 818 646

## Beschreibung

Die vorliegende Erfindung betrifft eine Vorrichtung zum Einspannen einer Turbinenschaufel mit einer Umfangsfläche und mit einer Schaufelspitze, wobei die Umfangsfläche eine Saugseite und eine Druckseite aufweist, während einer Schweißreparatur der Schaufelspitze.

Turbinenschaufeln sind in der Regel aus hochwarmfesten Superlegierungen hergestellt. Häufig weisen sie zudem noch eine gerichtete Kornstruktur auf oder sind sogar aus einem einkristallinen Material hergestellt. Turbinenschaufeln sind entsprechend teuer in der Herstellung.

Während des Betriebs sind Turbinenschaufeln korrosiven Heißgasen ausgesetzt, die zu einem Verschleiß der Turbinenschaufeln führen. Der Verschleiß tritt dabei insbesondere an hoch belasteten Abschnitten der Turbinenschaufeln wie etwa der Schaufelspitze auf. Zudem gibt es Turbinenschaufeln mit sogenannten Reibspitzen, die zum Abdichten des Strömungsfades dienen. Derartige Reibspitzen kontaktieren beim Anfahren einer Gasturbinenanlage einen Dichtring, der den die Turbinenschaufeln tragenden Turbinenläufer umgibt und reiben sich dabei in das Dichtringmaterial ein. Dabei entsteht jedoch nicht nur Abrieb am Dichtring, sondern auch an der Reibspitze.

Da Turbinenschaufeln wie eingangs dargelegt in der Herstellung sehr teuer sein können, ist man bestrebt, verschlissene Turbinenschaufeln wieder aufzubereiten, so dass erneut in einer Gasturbine zum Einsatz kommen können. Im Rahmen eines derartigen Wiederaufbereitungsprozesses kann es vorkommen, dass die ursprüngliche Form der Schaufelspitze wieder hergestellt werden muss. Dies erfolgt durch Auftragsschweißen, d.h. durch Wiederaufbauen der ursprünglichen Form der Reibspitze, indem Schweißmaterial schichtweise aufgetragen wird.

Bei diesem Schweißprozess, der beispielsweise mittels Laserschweißens erfolgt, findet ein erheblicher Wärmeeintrag in die Schaufelspitze statt. Ohne geeignete Gegenmaßnahmen kann dies zu Spannungen im Gefüge des Schaufelmaterials im Bereich der Schaufelspitze führen, welche die Qualität der Schaufelspitze verschlechtern und so die mögliche Lebensdauer der Schaufel verkürzen. Zudem muss beim schichtweisen aufgetragen des Schweißmaterials die zuvor aufgetragene Lage an Schweißmaterial unter einen bestimmten Wert abgekühlt sein, bevor die nächste Lage aufgeschweißt werden kann, weshalb der Schweißprozess relativ langwierig ist. Man ist daher bestrebt, die in die Schaufelspitze eingebrachte Wärme abzuführen, um das Entstehen von Spannungen während des Schweißprozesses zu vermeiden und den Schweißprozess zu beschleunigen.

In JP 10180442 A ist ein Verfahren beschrieben, in dem ein Auftragsschweißen auf einer Schaufelspitze erfolgt, während ein Gas oder eine Flüssigkeit durch im Inneren der Schaufel verlaufende Kanäle geleitet wird, um die Schaufel während des Schweißens zu kühlen.

DE 42 37 052 A1 beschreibt eine Vorrichtung zur Reparaturschweißung der Blattspitzen von Leit- oder Laufschaufeln von Turbomaschinen, in der eine Vorrichtung erwähnt ist, in welcher das gesamte Schaufelblatt entlang der Druck- und Saugseite zwischen zangenartig gegeneinander verspannten und gekühlten Backen in der zum Schweißen erforderlichen Position arretiert wird. Die Arretierung erfolgt so, dass das mit dem Schweißauftrag zu versehende Schaufelende geringfügig gegenüber den äußeren Oberflächen der Backen vorsteht. Als nachteilig wird dabei in DE 42 37 052 A1 angesehen, dass an der Eintrittskante und Austrittskante des Schaufelblattes keine genau definierbare Kühlung stattfindet, da an diesen Stellen die Backen auf die längste Schaufel abgestimmt werden. Zusätzlich wird es als Problem angesehen, dass es sich um gelaufene bzw. bereits gebrauchte Schaufeln handelt, die sich in ihrer Form zumindest geringfügig schon soweit verändert haben, dass sie nur unbestimmt mehr oder weniger großflächig am Backenmaterial anliegen. Außerdem wird beanstandet, dass die Herstellung der Backen sehr aufwendig ist und die Einsatzmöglichkeit praktisch auf einen ganz bestimmten Schaufeltyp einer Verdichter- oder Turbinenschaufel beschränkt ist, wenn überhaupt ein einigermaßen zufriedenstellendes Schweißergebnis erbracht werden soll. Die DE 42 37 052 A1 schlägt ausgehend von diesem Stand der Technik daher vor, statt der auf die Saugseite und die Druckseite abgestimmten Klemmbacken solche Klemmbacken zu verwenden, die auf die Eintritts- und Austrittskante des Schaufelblattes abgestimmte Einkerbungen aufweisen, in welche die Kanten des Schaufelblattes eingreifen, wobei die eine Backe fest, die andere in Richtung auf eine Schaufelkante verschiebbar geführt angeordnet ist. Dadurch soll an der Eintrittskante und der Austrittskante eine gleichbleibende Kühlung in genau festgelegter Höhe erzielt werden. Als weiterer großer Vorteil des in DE 42 37 052 A1 beschriebenen Spannkonzepts ist angegeben, dass dieses Spannkonzept die vielseitige Verwendbarkeit einer Vorrichtung zur Reparaturschweißung für viele verschiedene Schaufeln ermöglicht.

Die DE 10026829 A1 zeigt eine Vorrichtung zum Festspannen einer Turbinenschaufel, bei der stiftartige Spannelemente verwendet werden.

Aufgabe der vorliegenden Erfindung ist es, eine vorteilhafte Vorrichtung zum Einspannen einer Turbinenschaufel während einer Schweißreparatur der Schaufelspitze zur Verfügung zu stellen.

Die genannte Aufgabe wird durch eine Vorrichtung nach Anspruch 1 gelöst. Die abhängigen Ansprüche enthalten vorteilhafte Ausgestaltungen der Erfindung.

Erfindungsgemäß wird eine Vorrichtung zum Einspannen einer Turbinenschaufel während einer Schweißreparatur der Schaufelspitze zur Verfügung gestellt. Die Turbinenschaufel besitzt eine Umfangsfläche, die eine Saugseite und eine Druckseite aufweist, sowie eine Schaufelspitze. Die erfindungsgemäße Vorrichtung weist wenigstens eine bewegliche Klemmstruktur zum Anpressen an die Saugseite oder die Druckseite einer Turbinenschaufel im Bereich ihrer Schaufelspitze auf, wobei die Klemmstruktur zur Abfuhr von Wärme aus der Turbinenschaufel ausgebildet ist. Die wenigstens eine bewegliche Klemmstruktur weist eine Mehrzahl von Klemmelementen auf, die jeweils einzeln derart beweglich gelagert sind, dass sie wenigstens in Richtung auf die Umfangsfläche einer einzuspannenden Turbinenschaufel hin und von dieser weg bewegt werden können.

In einer vorteilhaften Ausgestaltung der erfindungsgemäßen Vorrichtung sind sowohl eine Klemmstruktur zum Anpressen an die Saugseite der Umfangsfläche als auch eine Klemmstruktur zum Anpressen an die Druckseite der Umfangsfläche vorhanden. Jede der beweglichen Klemmstrukturen weist dabei eine Anzahl von Klemmelementen auf, die jeweils einzeln derart beweglich gelagert sind, dass sie in Richtung auf die Umfangsfläche einer einzuspannenden Turbinenschaufel hin und von dieser weg bewegt werden können.

Dadurch, dass die Klemmstruktur(en) an die Saugseite und/oder an die Druckseite der Turbinenschaufel anpressbar ist bzw. sind, kann eine große Kontaktfläche zur Umfangsfläche der Turbinenschaufel hergestellt werden, die eine rasche Abfuhr der durch den Schweißprozess eingebrachten Wärme ermöglicht. Gleichzeitig ermöglicht die Ausgestaltung der Klemmstruktur in Form einer Mehrzahl von Klemmelementen das Anpassen der Klemmstruktur an die Form der jeweiligen Umfangsfläche. Die erfindungsgemäße Vorrichtung ermöglicht daher gleichzeitig das großflächige Kontaktieren der Umfangsfläche einer zu schweißenden Turbinenschaufel und das Anpassen der diese Umfangsfläche kontaktierenden Klemmstruktur an Turbinenschaufeln mit unterschiedlich geformten Umfangsflächen, insbesondere mit unterschiedlich geformten Saug- oder Druckseiten. Ebenso kann auch bei Turbinenschaufeln, die aufgrund von Verschleiß von der Nominalform abweichen, ein guter Kontakt zur Umfangsfläche gewährleistet werden. Selbst wenn aufgrund von Verscheiß jedes Klemmelement nicht mit einer gesamten zur Anlage an der Saug- oder Druckseite vorgesehenen Fläche tatsächlich an dieser anliegen sollte, ist dennoch aufgrund der Mehrzahl über die Saug- bzw. Druckseite verteilter Kontakte eine gleichmäßige Wärmeabfuhr möglich. Aufgrund der Wärmeabfuhr erfolgt ein rascheres Abkühlen, wodurch sich die Dauer des Schweißprozesses erheblich verringern lässt. Aufgrund der hohen Abkühlgeschwindigkeit erhält man zudem bessere Schweißergebnisse.

Turbinenschaufeln sind nach vielen Jahren im Kraftwerksbetrieb häufig individuell verformt. Wenn auf die komplexe Freiformgeometrie der Oberfläche starre, nach Neuteilgeometrie negativ abgeformte Kühlkörper angedrückt würden, würden diese jeweils nur an einzelnen wenigen Punkten (theoretisch an drei Punkten) anliegen. Die Kühlleistung wäre dabei aufgrund der Spaltbildung zwischen Schaufel und Kühlkörper gering, da Luft als Gas isoliert und den Wärmefluss unterbricht. Im Rahmen der Erfindung ist daher es Vorteilhaft, wenn jedes der Klemmelemente zusätzlich zu dem Freiheitsgrad der translatorischen Bewegung in Richtung auf die Umfangsfläche einer einzuspannenden Turbinenschaufel hin und von dieser weg auch zwei rotatorische Freiheitsgrade aufweist. In dieser vorteilhaften Ausgestaltung legen sich die Klemmelemente als kleine, jeweils in wenigstens den genannten Freiheitzsgraden frei beweglich gelagerte Kühlkörper an die Schaufel an, so dass sie sich in ihrer Orientierung an die Oberflächengeometrie der Schaufelumfangsfläche anpassen können. Es kommt zwar auch hier ggf. an jedem Klemmelement zu den drei Auflagepunkten, aber die dabei entstehenden Luftspalte sind so klein, dass sie vernachlässigt werden können. Die Summe der einzelnen Berührflächen ist groß genug, um die Wärme abzuführen. Zusätzlich zu den genannte Freiheitsgraden können ggf. weitere Freiheitsgrade vorhanden sein.

Die Vorrichtung zum Einspannen einer Turbinenschaufel kann insbesondere eine Anpresseinrichtung zum Aufbringen eines Anpressdrucks für das Anpressen der wenigstens einen beweglichen Klemmstruktur an die Umfangsfläche der Turbinenschaufel aufweisen. Eine derartige Anpressvorrichtung zum Aufbringen des Anpressdrucks kann beispielsweise eine oder mehrere auf die Klemmelemente einwirkende Federn aufweisen. Dabei ist es vorteilhaft, wenn jedes Klemmelement mit einer eigenen Feder zusammenwirkt. Die Anpressvorrichtung kann aber auch einen Antrieb aufweisen, was eine Steuerung des Anpressdrucks ermöglicht. Dabei kann die Anpressvorrichtung insbesondere für jedes Klemmelement einen eigenen Aktor zum Bewegen des entsprechenden Klemmelementes aufweisen. Sie kann hydraulisch oder pneumatisch, also mit hydraulischen oder pneumatischen Aktoren, ausgebildet sein, wobei insbesondere jedem Klemmelement ein eigener hydraulischer bzw. pneumatischer Aktor zugeordnet sein kann. Die hydraulisch oder pneumatisch Anpressvorrichtung bietet die Möglichkeit, alle Klemmelemente über einen gemeinsamen Hydraulikkreis bzw. Pneumatikkreis mit demselben Fluiddruck zu beaufschlagen. Dies führt dazu, dass alle Klemmelemente ohne aufwendige Steuerung mit demselben definiert einstellbaren Anpressdruck gegen die Umfangsfläche der Turbinenschaufel gepresst werden, was wiederum im Hinblick auf eine gleichmäßige Wärmeabfuhr über die gesamte kontaktierte Umfangsfläche der Turbinenschaufel vorteilhaft ist. Alternativ besteht aber auch die Möglichkeit, eine elektrische Anpressvorrichtung zu verwenden, also eine Anpressvorrichtung mit elektromechanischen Aktoren, in der insbesondere jedem Klemmelement ein eigener elektrometrischer Aktor, etwa ein Elektromotor, insbesondere ein Linearmotor, zugeordnet sein kann. Zwar ist die Steuerung einer derartigen Anpressvorrichtung komplexer, wenn ein gleichmäßiger Anpressdruck für alle Klemmelemente erzielt werden soll, dafür ist aber eine schnelle und individuelle Ansteuerung des Anpressdrucks einzelner Klemmelemente einfach möglich. Durch Steuern des Anpressdrucks einzelner Klemmelemente kann dann beispielsweise einem in der Umfangsfläche auftretenden unerwünschten Wärmegradienten dadurch entgegengewirkt werden, dass einzelne Klemmelemente mit höherem oder niedrigem Druck angepresst werden, um so über die Innigkeit des Kontaktes zur Umfangsfläche den Wärmeaustausch zwischen der Oberfläche und den Klemmelementen zu steuern. Selbstverständlich ist dies auch möglich, wenn individuelle Hydraulik- oder Pneumatikkreisläufe für jedes Klemmelement vorhanden sind.

Die Klemmelemente können insbesondere aus einem Material hergestellt sein, dessen Wärmeleitfähigkeit größer ist, als die Wärmeleitfähigkeit des Materials, aus dem die Umfangsfläche der Turbinenschaufel besteht. Auf diese Weise kann ein Wärmestau in den Klemmelementen vermieden werden, so dass jederzeit eine gute Wärmeabfuhr gewährleistet ist.

Die von den Klemmelementen aufgenommene Wärme kann über eine mit den Klemmelementen verbundene Wärmesenke abgegeben werden. Als Wärmesenke kommen etwa eine großflächige Struktur, beispielsweise Kühlrippen, ein Wärmetauscher etc. in Betracht. Die Wärmesenke kann mit der Umgebung oder einem sekundären Kühlkreislauf zur Abgabe der Wärme in Verbindung stehen.

Die erfindungsgemäße Vorrichtung kann wenigstens ein Gehäuse mit einem zum Hindurchleiten eines Kühlfluids ausgebildeten Gehäuseinnenraum aufweisen, wobei das Gehäuse einen Kühlfluideingang und einen Kühlfluidausgang umfasst. Die Klemmelemente weisen einen aus dem Gehäuseinnenraum in Richtung auf die Schaufelspitze herausragenden Abschnitt und einen in den Gehäuseinnenraum hineinragen Abschnitt auf. Über den in den Gehäuseinnenraum hineinragenden Teil eines Klemmelements kann dann die von der Oberfläche aufgenommene Wärme an ein durch das Gehäuseinnere strömendes Kühlfluid abgegeben werden. Dabei kann insbesondere ein durch das Gehäuseinnere hindurchführender und mit der Wärmesenke verbundener Kühlfluidkreislauf vorhanden sein. Der Kühlfluidkreislauf kann außerdem über einen Wärmetauscher mit einem sekundären Kühlfluidkreislauf verbunden sein. Das Kühlfluid kann eine Kühlflüssigkeit, insbesondere Wasser, oder ein Gas, insbesondere Luft, sein. Das verwendete Kühlfluid kann dabei insbesondere im Hinblick auf die benötigte Kühlleistung ausgewählt werden. Ein solcher Kreislauf ermöglicht es, die Wärmesenke in größerer Entfernung von den Klemmelementen anzuordnen. Wenn als Wärmesenken großflächige Strukturen verwendet werden, behindern diese dann nicht den Schweißprozess.

Wenn man die Klemmelemente gelenkig lagern will, sind viele Gelenke nötig, wenn man die Klemmelemente mit den oben beschriebenen Freiheitsgraden lagern will. Beim Auftragsschweißen wird ein hartes und feinstaubiges Metallpulver zugeführt, das typischerweise nur etwa zu Hälfte verbraucht wird. Das nicht verbrauchte Pulver verteilt sich in der Vorrichtung. Jedes Gelenk würde dadurch sofort blockieren, sofern es nicht geeignet abgedichtet ist. Der Gehäuseinnenraum ist daher in einer vorteilhaften Weiterbildung der erfindungsgemäßen Vorrichtung in Richtung auf die Turbinenschaufel mit Hilfe einer elastischen Membran, bspw. einer Gummimembran, gekapselt, wobei die Membran mit den Klemmelementen fest verbunden ist, bspw. durch Formschluss oder Stoffschluss. Die Membran unterteilt dabei die Klemmelemente in den aus dem Gehäuseinnenraum in Richtung auf die Schaufelspitze herausragenden und den in den Gehäuseinnenraum hineinragen Abschnitt, wobei sich alle beweglichen Teile der Klemmelemente wie bspw. Federn oder Gelenke im in den Gehäuseinnenraum hineinragen Abschnitt der Klemmelemente befinden. Mit dieser Ausgestaltung befinden alle beweglichen Teile der Klemmelemente im gekapselten Gehäuseinnenraum, so dass sie gegen das feinstaubige Metallpulver zuverlässig geschützt sind. Wegen der extremen Schweißpulveratmosphäre werden in dieser Weiterbildung also keine dynamischen Dichtungen verwendet, sondern eine elastischem Membran wie bspw. eine Gummimembran, die eine Bewegung der Klemmelemente relativ zur Schaufelspitze erlaubt. Die Dichtwirkung wird daher nicht durch Reibung zwischen der Membran und Kühlelement erzeugt, die zu einem abrasiven Verschleiß führen würde, sondern das Dichtungsprinzip ist formschlüssig oder stoffschlüssig. Dabei werden die Freiheitsgrade für die Bewegung über die elastische Verformung der Membran bereitgestellt. Gleichzeitig kann die elastische Membran als Lager- und Führungselement eingesetzt werden, das die Lagerung in bis zu sechs Freiheitsgraden erlaubt.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
Figur 1 zeigt die erfindungsgemäße Vorrichtung in einer teilweise durchsichtigen Darstellung.
Figur 2 zeigt Klemmelemente, welche für die Saugseite einer Turbinenschaufel vorgesehen sind.
Figur 3 zeigt Klemmelemente, welche für die Druckseite einer Turbinenschaufel vorgesehen sind.
Figur 4 zeigt eine stark schematisierte Detailansicht einer Ausführungsvariante der Vorrichtung aus Fig. 1.
Figur 5 zeigt eine Abwandlung der in Figur 4 gezeigten Ausführungsvariante.
*Figur 6* *zeigt beispielhaft eine Gasturbine in einem Längsteilschnitt.*
*Figur* 7 *zeigt in perspektivischer Ansicht eine Laufschaufel oder Leitschaufel einer Strömungsmaschine.*
*Figur 8* *zeigt eine Gasturbinenbrennkammer.*

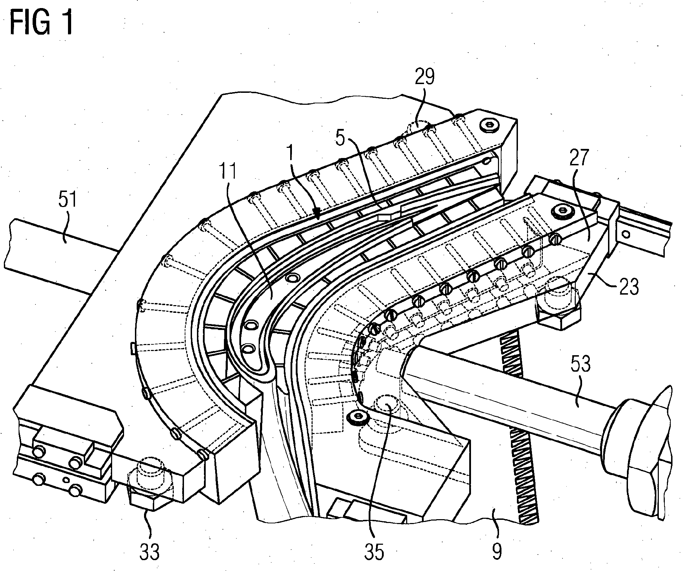

Nachfolgend wird ein Ausführungsbeispiel für die erfindungsgemäße Vorrichtung zum Einspannen einer Turbinenschaufel mit Bezug auf die Figuren 1 bis 4 beschrieben. Fig. 1 zeigt dabei eine perspektivische Ansicht auf die erfindungsgemäße Vorrichtung, wobei Teile der Vorrichtung durchsichtig dargestellt sind, um das Innere dieser Teile besser erkennen zu können.

Wie in Fig. 1 zu erkennen ist, umfasst die erfindungsgemäße Vorrichtung zum Einspannen einer Turbinenschaufel zwei Klemmstrukturen 1,3, die derart ausgebildet sind, dass sie an die Umfangsfläche einer Turbinenschaufel 9, genauer an die Saugseite 5 bzw. an die Druckseite 7, angepresst werden können. Bei der Benutzung der Vorrichtung erfolgt das Anpressen der Klemmstrukturen 1,3 an die Saugseite 5 bzw. an die Druckseite 7 der Turbinenschaufel 9 wenige Millimeter unterhalb einer Schaufelspitze 11, die mittels Auftragsschweißens repariert werden soll. Im Sinne einer möglichst guten Wärmeabfuhr aus dem zu schweißenden Bereich, ist es wünschenswert, die Klemmstrukturen so nah wie möglich an die Schaufelspitze heranzuführen. Typischerweise setzen die Klemmstrukturen im Bereich zwischen 1 und 5 mm unterhalb der Schaufelspitze 11 an.

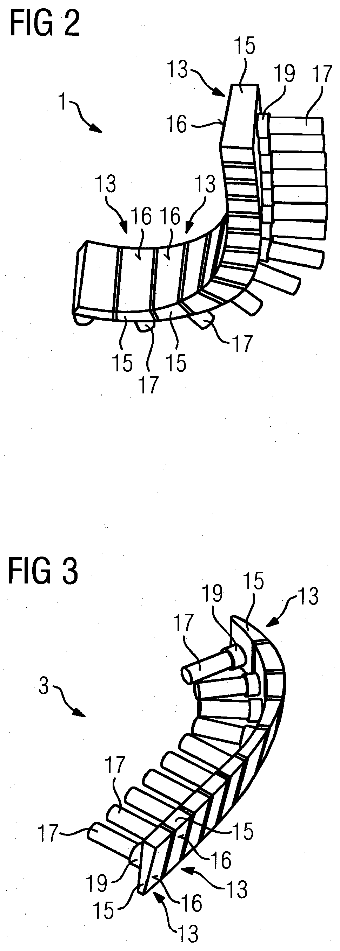

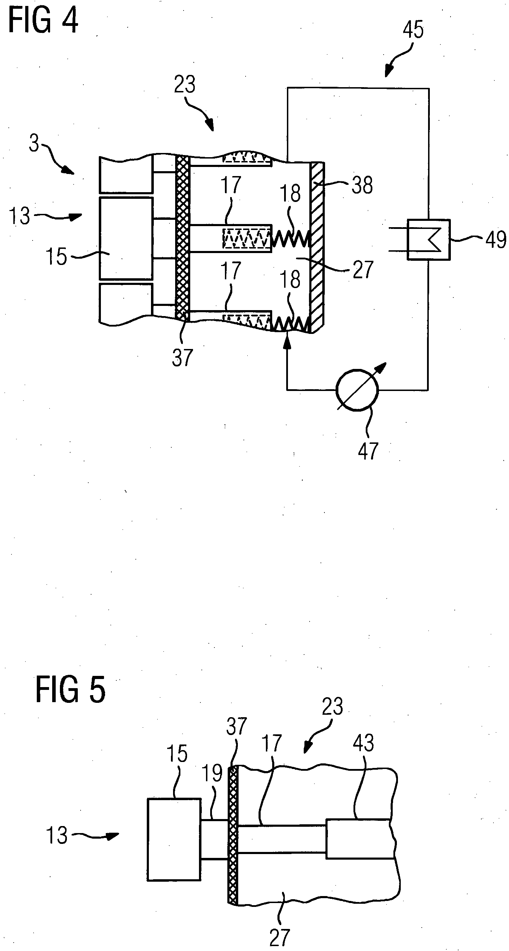

Die Klemmstrukturen 1,3 sind in den Figuren 2 und 3 im Detail dargestellt. Figur 2 zeigt dabei die Klemmstruktur 1, die zum Anpressen an die Saugseite 5 ausgebildet ist, wohingegen Fig. 3 die zum Anpressen an die Druckseite 7 ausgebildete Klemmstruktur 3 zeigt. Beide Klemmstrukturen sind aus einer Mehrzahl von Klemmelementen 13 zusammengesetzt, die jeweils eine Klemmbacke 15 mit einer als Anlagefläche 16 zur Anlage an die Umfangsfläche der Turbinenschaufel ausgebildeten Oberfläche aufweisen. Außerdem weisen sie einen Schaft 17 auf, der sich an der von der Anlagefläche 16 abgewandten Seite der Klemmbacke 15 befindet und sich von der Klemmbacke 15 weg erstreckt. Jeder Schaft 17 weist an seinem an die jeweilige Klemmbacke 15 angrenzenden Ende eine Verdickung 19 auf. Innen im Schaft 17 oder außen am Schaft 17 ist eine Feder angeordnet (vgl. Figur 4) die über das von der Klemmbacke 15 abgewandte Schaftende hinausragt.

Wie in Fig. 1 zu erkennen ist, weist die Vorrichtung zwei Gehäuse 21, 23 auf, die jeweils einen von einem Kühlfluid durchströmbaren Gehäuseinnenraum 25, 27 besitzen. Außerdem weisen die Gehäuse 21,23 jeweils einen Kühlfluideingang 29,31 und einen Kühlfluidausgang 33,35 auf, die mit dem jeweiligen Gehäuseinneren 25,27 kommunizieren, so dass ein Kühlfluid durch den Gehäuseinnenraum 25,27 geleitet werden kann. Als Kühlfluide kommen hierbei sowohl Flüssigkeiten als auch Gase in Betracht. Als Kühlflüssigkeit eignet sich insbesondere Wasser, da dieses umweltverträglich und in der Regel überall verfügbar ist. Aber auch andere Kühlflüssigkeiten wie beispielsweise Öle oder speziell als Kühlflüssigkeiten konzipierte Flüssigkeiten kommen grundsätzlich in Betracht. Als gasförmiges Kühlfluid bietet sich insbesondere Luft an. Aber auch Gase mit höherer Wärmekapazität, etwa dreiatomig Gase wie beispielsweise Kohlendioxid, können Anwendung finden. Welches Kühlfluid tatsächlich zur Anwendung kommt, hängt von einer Mehrzahl von Faktoren ab, beispielsweise der beim Schweißen in die Schaufelspitze 11 eingebrachten Wärmemenge, der Temperatur des einströmenden Kühlfluids und der pro Zeiteinheit durch den Gehäuseinnenraum 25,27 strömenden Fluidmenge.

Um die in die Schaufelblattspitze eingebrachte Wärme zuverlässig abführen zu können, werden die einzelnen Klemmbacken 13 der Klemmstrukturen 1,3 im vorliegenden Ausführungsbeispiel mittels der in oder an den Schäften 17 angeordneten Federn 18 mit einem bestimmten Anpressdruck an die Umfangsfläche der Turbinenschaufel, d.h. an die Saugseite 5 und die Druckseite 7, angepresst. Zudem ist es vorteilhaft, wenn die Klemmelemente 13 aus einem Material bestehen, das eine höhere Wärmleitfähigkeit als das Material der Umfangsfläche der Turbinenschaufel 9 aufweist. Auf diese Weise kann vermieden werden, dass die Wärmeabfuhr ins Stocken gerät, wenn die Anlageflächen 16, mit denen die Klemmbacken 15 die Umfangsfläche der Turbinenschaufel 9 kontaktieren, dieselbe Temperatur wie die Umfangsfläche 9 selbst erreichen.

Das Abführen der Wärme aus den Klemmelementen 13 erfolgt über das durch die Gehäuseinnenräume 25,27 strömende Kühlfluid. Um dies zu ermöglichen, ragen die Klemmelemente 13 mit ihren Schäften 17 in die Gehäuseinnenräume 25,27 hinein, so dass die Schäfte 17 vom Kühlfluid umströmt werden. Dabei kann das Kühlfluid Wärme von den Klemmelementen 13 abführen. Wenn ein offener Kühlfluidkreislauf Verwendung findet, wird die abgeführte Wärme mitsamt dem Kühlfluid an die Umgebung abgegeben. Es besteht aber auch die Möglichkeit, einen geschlossenen Kühlfluidkreislauf zu verwenden. Die Wärmeabfuhr mittels eines geschlossenen Kühlfluidkreislaufes wird später mit Bezug auf Fig. 4 genauer beschrieben.

Die Fig. 4 zeigt in einer stark schematischen Darstellung einen Ausschnitt aus der in Fig. 1 gezeigten Vorrichtung. Der Ausschnitt zeigt einen Teil der Klemmstruktur 3, wobei insbesondere ein Klemmelement 13 zu erkennen ist. Außerdem ist ein Ausschnitt aus dem Gehäuse 23 mit seinem Gehäuseinnenraum 27 zu erkennen. Das Gehäuse 23 ist gegen das Eindringen von Metallpulver beim Auftragsschweißen gekapselt. Auf der zum Schaufelblatt weisenden Seite des Gehäuses ist dabei eine elastische Membran 37 vorhanden, die form- oder stoffschlüssig mit den Schäften 17 der Klemmelemente 13 verbunden ist und so jedes Klemmelement 13 in einen in den Gehäuseinnenraum 27 hineinragenden Abschnitt und einen aus dem Gehäuseinnenraum 27 herausragenden Abschnitt unterteilt. Im vorliegenden Ausführungsbeispiel umfasst der in den Gehäuseinnenraum 27 hineinragenden Abschnitt des Klemmelementes 13 den nicht verdickten Abschnitt des Schaftes 17 sowie die Feder 18 und der aus dem Gehäuseinnenraum 27 herausragende Abschnitt die Klemmbacke 15 und den verdickte Abschnitt 19 des Schaftes 17. Der verdickte Bereich 19 dient als Abstandshalter zwischen der elastischen Membran 37 und der Klemmbacke 15. Andere Aufteilungen zwischen dem im Gehäuse angeordneten Abschnitt und dem außerhalb des Gehäuses angeordneten Abschnitt sind möglich, solange sich alle beweglichen Elemente - im vorliegenden Ausführungsbeispiel also die Feder 18 - im gekapselten Gehäuseinnenraum 27 befinden.

Die elastische Membran 37 ist außer mit den Schäften der Klemmelemente 13 auch mit der Gehäusewand 38 form- oder stoffschlüssig verbunden so dass die Kapselung des Gehäuses 23 erreicht wird. Als elastische Membran findet im vorliegenden Ausführungsbeispiel eine Gummimembran Verwendung, aber auch andere elastische Membranen, welche eine Beständigkeit gegenüber der Schweißatmosphäre aufweisen, können Verwendung finden.

Die elastische Membran 37 dient im vorliegenden Ausführungsbeispiel außer zur Kapselung auch als Lager für die Klemmelemente 13 Aufgrund der Elastizität der Membran 37 sind die Klemmelemente 13 wenigstens in einem translatorischen und zwei rotatorischen Freiheitsgraden beweglich gelagert. Auf diese Weise können sie ihre Orientierung an die Oberflächengeometrie der Schaufelumfangsfläche der aktuell eingespannten Turbinenschaufel anpassen. Die Drehachsen der rotatorischen Freiheitsgrade, um die bei diesem Anpassen die Drehung erfolgen kann, verlaufen hierbei im Wesentlichen in der Tangentialebene des Oberflächenabschnitts, an den das jeweilige Klemmelement angedrückt wird.

Der Anpressdruck zum Anpressen der Klemmelemente 13 an die Umfangsfläche der Turbinenschaufel 9 wird von den Federn 18, die im vorliegenden Ausführungsbeispiel als Spiralfedern ausgebildet sind, aufgebracht. Die Federn 18 sind mit ihrem von den Schäften entfernten Enden an der Gehäusewand 38 gelagert, so dass eine zwischen dem Klemmelement 13 und der Gehäusewand 37 wirkende Federkraft bereitgestellt wird.

Die Beweglichkeit der Klemmelemente in den genannten Freiheitsgraden gewährleistet, dass alle Klemmbacken 15 die Umfangsfläche der Turbinenschaufel 9 kontaktieren, selbst dann, wenn die Form der Umfangsfläche aufgrund von Toleranzen oder aufgrund von betriebsbedingten Veränderungen von der Idealform abweicht. Die Spiralfedern 18 können also als Anpressvorrichtung zum Aufbringen des Anpressdruckes angesehen werden. Es sei an dieser Stelle angemerkt, dass die in Fig. 4 gezeigte Anordnung und die in Fig. 4 gezeigte Form der Federn 41 lediglich ein mögliches Beispiel hierfür darstellen. Statt Spiralfedern können auch andere Federformen, beispielsweise Blattfedern oder Tellerfedern in der gezeigten Anordnung die Spiralfedern 18 ersetzten. Auch eine andere Anordnung der Federn ist grundsätzlich möglich. So besteht beispielsweise die Möglichkeit, die Federn an den Außenseiten der Schäfte 17 anzuordnen. Ebenso besteht die Möglichkeit, vollständig auf Federn zu verzichten und stattdessen einen Antrieb als Anpressvorrichtung zum Aufbringen des Anpressdrucks zu verwenden. Ein solcher Antrieb kann für jedes Klemmelement 13 wenigstens einen eigenen, im Gehäuseinnenraum 27 angeordneten Aktor aufweisen, welcher das jeweilige Klemmelement 13 bewegt. Solche Aktoren können hydraulisch, pneumatisch oder elektromechanisch sein. Im Falle hydraulischer Aktoren kann beispielsweise jedes Klemmelement 13 mit einem Hydraulikzylinder ausgestattet sein. Entsprechendes gilt auch für pneumatische Aktoren. Auch hier kann jedes Klemmelement mit einem Pneumatikzylinder ausgestattet sein. Im Falle elektromechanischer Aktoren besteht beispielsweise die Möglichkeit, jedes Klemmelement 13 mit einem Elektromotor, insbesondere mit einem Linearmotor zu versehen.

Das Verwenden eines Antriebs als Anpressvorrichtung zum Aufbringen eines Anpressdrucks bietet die Möglichkeit, den Anpressdruck eines jeden Klemmelementes 13 individuell zu steuern, so dass von jedem Klemmelement 13 ein individuell definierter Anpressdruck zur Verfügung gestellt wird. Beispielsweise besteht die Möglichkeit, die Steuerung so vorzunehmen, dass jedes Klemmelement 13 denselben Anpressdruck aufbringt. Es besteht aber auch die Möglichkeit, den Anpressdruck, den ein Klemmelement 13 aufbringt, an die im Bereich seines Klemmbackens 15 herrschende Oberflächentemperatur der Turbinenschaufel anzupassen. Durch einen innigeren Kontakt der Oberfläche kann die Wärmeabfuhr erhöht werden, so dass beim Vorliegen von Wärmegradienten in der Umfangsfläche der Turbinenschaufel die Wärmeabfuhr lokal so verteilt werden kann, dass der vorherrschende Temperaturgradient ausgeglichen, zumindest jedoch nicht vergrößert wird. Ein Klemmelement 13 mit einem Hydraulikzylinder 43 als Beispiel für den Aktor eines Antriebs für das Klemmelement ist schematisch in Fig. 5 dargestellt.

Die Wärmeabfuhr im Falle eines geschlossenen Kühlkreislaufes wird nachfolgend mit Bezug auf Fig. 4 beschrieben. In dieser Figur ist der durch das Gehäuseinnere 27 führende Kühlkreislauf 45 schematisch dargestellt. Er umfasst eine Pumpe 47 oder einen Kompressor und im vorliegenden Ausführungsbeispiel einen Wärmetauscher 49, über den die Wärme an einen sekundären Kreislauf oder die Umgebung (nicht dargestellt) abgegeben werden kann. Es besteht bspw. die Möglichkeit ein großflächiges Kühlelement, etwa in Form von Kühlrippen, vorzusehen, um die im Kühlkreislauf 45 befindliche Wärme an die Umgebung abzugeben. Grundsätzlich können die Klemmelemente 13 über den Kühlkreislauf mit jeder geeigneten Wärmesenke, welche dem Kühlfluid Wärme entzieht, verbunden sein.

Im vorliegenden Ausführungsbeispiel wird die Turbinenschaufel wie bereits erwähnt im Bereich ihrer Schaufelspitze 11 mit Hilfe der Klemmstrukturen 1,3 eingespannt, um sie dann im Rahmen eines Auftragsschweißprozesses zu reparieren. Das Einspannen kann mechanisch, hydraulisch, pneumatisch oder auf elektromechanischem Wege erfolgen. Im vorliegenden Ausführungsbeispiel kommen zwei Spannspindeln 51,53 (siehe Figur 1) zur Anwendung. Diese greifen jeweils an derjenigen Gehäuseseite der Gehäuse 21,23 an, die der Klemmstruktur 1,3 gegenüber liegt. Wenn als Anpresseinrichtung zum Aufbringen eines Anpressdruckes ein Antrieb Verwendung findet, kann dieser auch zum Aufbringen der zum Einspannen der Turbinenschaufel nötigen Klemmkraft herangezogen werden. Es besteht aber auch in diesem Fall die Möglichkeit, getrennte Einrichtungen zum Aufbringen der Klemmkraft und zum Aufbringen des Anpressdruckes zu verwenden.

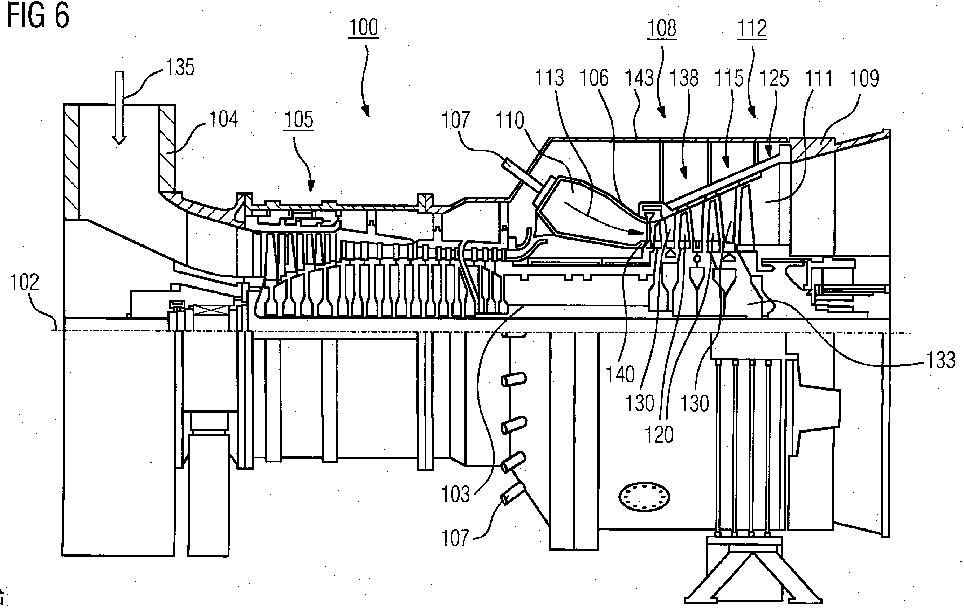

Die Figur 6 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

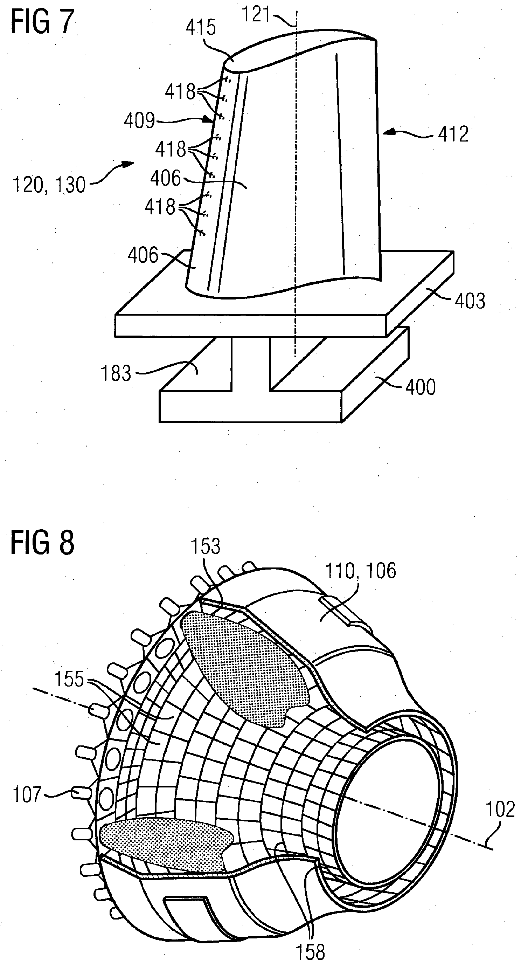

Die Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalberischwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown.oxide layer).

Vorzugsweise weist die Schichtzusammensetzung Co-30Ni-28Cr8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 8 zeigt eine Brennkammer 110 einer Gasturbine. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Die vorliegende Erfindung wurde anhand eines konkreten Ausführungsbeispiels zu Erläuterungszwecken näher beschrieben. Da wie im bereits im Text erwähnt Abwandlungen von diesem konkreten Ausführungsbeispiel möglich sind, soll die Erfindung nicht auf dieses Ausführungsbeispiel eingeschränkt sein, sondern lediglich durch die angehängten Ansprüche.

## Patentansprüche

1. Vorrichtung zum Einspannen einer Turbinenschaufel (9) mit einer eine Saugseite (5) und eine Druckseite (7) aufweisenden Umfangsfläche sowie mit einer Schaufelspitze während einer Schweißreparatur der Schaufelspitze (11), wobei die Vorrichtung wenigstens eine bewegliche Klemmstruktur (1,3) zum Anpressen an die Saugseite (5) oder die Druckseite (7) einer Turbinenschaufel (9) im Bereich ihrer Schaufelspitze (11) aufweist, wobei die Klemmstruktur (1,3) zur Abfuhr von Wärme aus der Turbinenschaufel (9) ausgebildet ist, und wobei
die wenigstens eine bewegliche Klemmstruktur (1,3) eine Mehrzahl von Klemmelementen (13) aufweist, die jeweils einzeln derart beweglich gelagert sind, dass sie wenigstens in Richtung auf die Umfangsfläche einer einzuspannenden Turbinenschaufel (9) hin und von dieser weg bewegt werden können,
**dadurch gekennzeichnet, dass**
jedes der Klemmelemente (13) wenigstens in zwei rotatorischen Freiheitsgraden beweglich gelagert ist.

2. Vorrichtung nach Anspruch 1,
**dadurch gekennzeichnet, dass**
eine Anpresseinrichtung (41,43) zum Aufbringen eines Anpressdruckes für das Anpressen der wenigstens einen beweglichen Klemmstruktur (1,3) an die Umfangsfläche der Turbinenschaufel (9) vorhanden ist.

3. Vorrichtung nach Anspruch 2,
**dadurch gekennzeichnet, dass**
die Anpressvorrichtung zum Aufbringen des Anpressdruckes eine oder mehrere auf die Klemmelemente (13) einwirkende Federn (41) aufweist

4. Vorrichtung nach Anspruch 2,
**dadurch gekennzeichnet, dass**
die Anpressvorrichtung zum Aufbringen des Anpressdruckes einen Antrieb umfasst.

5. Vorrichtung nach Anspruch 4,
**dadurch gekennzeichnet, dass**
der Antrieb für jedes Klemmelement (13) einen eignen Aktor (43) zum Bewegen des entsprechenden Klemmelements (13) aufweist.

6. Vorrichtung nach Anspruch 5,
**dadurch gekennzeichnet, dass**
der Antrieb ein hydraulischer oder pneumatischer Antrieb ist, bei dem jedem Klemmelement (13) ein eigener hydraulischer bzw. pneumatischer Aktor (43) zugeordnet ist.

7. Vorrichtung nach Anspruch 5,
**dadurch gekennzeichnet, dass**
der Antrieb ein elektrischer Antrieb ist, bei dem jedem Klemmelement (13) ein eigener elektromechanischer Aktor zugeordnet ist.

8. Vorrichtung nach einem der Ansprüche 1 bis 7,
**dadurch kennzeichnet, dass**
die Klemmelemente (13) aus einem Material bestehen, dessen Wärmeleitfähigkeit größer ist als die des Materials, aus dem die Umfangsfläche der Turbinenschaufel (9) besteht.

9. Vorrichtung nach einem der Ansprüche 1 bis 8,
**dadurch gekennzeichnet, dass**
die Klemmelemente (13) mit einer Wärmesenke verbunden sind.

10. Vorrichtung nach einem der Ansprüche 1 bis 9,
**dadurch kennzeichnet, dass**
sie wenigstens ein Gehäuse (21,23) mit einem zum Hindurchleiten eines Kühlfluids ausgebildeten Gehäuseinnenraum (25,27), einem Kühlfluideingang (29,31) und einem Kühlfluidausgang (33,35) umfasst und dass die Klemmelemente (13) einen aus dem Gehäuseinnenraum (25,27) in Richtung auf die Schaufelspitze (11) herausragenden Abschnitt (15, 19) und einen in den Gehäuseinnenraum (25,27) hineinragen Abschnitt (17) aufweisen.

11. Vorrichtung nach Anspruch 9 und Anspruch 10,
**dadurch gekennzeichnet, dass**
wenigstens ein durch den Gehäuseinnenraum (25,27) hindurch führender und mit der Wärmesenke verbundener Kühlfluidkreislauf vorhanden ist.

12. Vorrichtung nach Anspruch 10 oder Anspruch 11,
**dadurch kennzeichnet, dass**
der Gehäuseinnenraum (25,27) in Richtung auf die Turbinenschaufel mit Hilfe einer elastischen Membran gekapselt ist, wobei die Membran mit den Klemmelementen (13) fest verbunden ist und die Klemmelemente (13) in den aus dem Gehäuseinnenraum (25,27) in Richtung auf die Schaufelspitze (11) herausragenden Abschnitt (15,19) und den in den Gehäuseinnenraum (25,27) hineinragen Abschnitt (17) unterteilt wobei sich alle beweglichen Teile der Klemmelemente (13) in dem in den Gehäuseinnenraum (25,27) hineinragen Abschnitt der Klemmelemente befinden.

13. Vorrichtung nach einem der Ansprüche 1 bis 12,
**dadurch gekennzeichnet, dass**
sowohl eine Klemmstruktur (1) zum Anpressen an die Saugseite (5) der Umfangsfläche als auch eine Klemmstruktur (3) zum Anpressen an die Druckseite (7) der Umfangsfläche vorhanden sind, wobei jede der beweglichen Klemmstrukturen (1,3) eine Mehrzahl von Klemmelementen (13) aufweist, die jeweils einzeln derart beweglich gelagert sind, dass sie wenigstens in Richtung auf die Umfangsfläche einer einzuspannenden Turbinenschaufel (9) hin und von dieser weg bewegt werden können.

## Claims

1. Device for clamping a turbine blade (9) with a peripheral surface having a suction side (5) and a pressure side (7) and with a blade tip during a welding repair of the blade tip (11), the device having at least one movable clamping structure (1, 3) for pressing against the suction side (5) or the pressure side (7) of a turbine blade (9) in the region of its blade tip (11), the clamping structure (1, 3) being designed for removing heat from the turbine blade (9), and the at least one movable clamping structure (1, 3) having a plurality of clamping elements (13), which are respectively mounted in an individually movable manner, in such a way that they can be moved at least in the direction toward and away from the peripheral surface of a turbine blade (9) to be clamped,
**characterized in that**
each of the clamping elements (13) is mounted movably at least in two rotational degrees of freedom.

2. Device according to Claim 1,
**characterized in that**
there is a pressing device (41, 43) for applying a pressing pressure for pressing the at least one movable clamping structure (1, 3) against the peripheral surface of the turbine blade (9).

3. Device according to Claim 2,
**characterized in that**
the pressing device for applying the pressing pressure has one or more springs (41) acting on the clamping elements (13).

4. Device according to Claim 2,
**characterized in that**
the pressing device for applying the pressing pressure comprises a drive.

5. Device according to Claim 4,
**characterized in that**
the drive has for each clamping element (13) a dedicated actuator (43) for moving the corresponding clamping element (13).

6. Device according to Claim 5,
**characterized in that**
the drive is a hydraulic or pneumatic drive, in the case of which each clamping element (13) is assigned a dedicated hydraulic or pneumatic actuator (43).

7. Device according to Claim 5,
**characterized in that**
the drive is an electrical drive, in the case of which each clamping element (13) is assigned a dedicated electromechanical actuator.

8. Device according to one of Claims 1 to 7,
**characterized in that**
the clamping elements (13) consist of a material of which the thermal conductivity is greater than that of the material of which the peripheral surface of the turbine blade (9) consists.

9. Device according to one of Claims 1 to 8,
**characterized in that**
the clamping elements (13) are connected to a heat sink.

10. Device according to one of Claims 1 to 9,
**characterized in that**
it comprises at least one housing (21, 23) with a housing interior space (25, 27) designed for passing through a cooling fluid, a cooling fluid inlet (29, 31) and a cooling fluid outlet (33, 35) and **in that** the clamping elements (13) have a portion (15, 19) protruding from the housing interior space (25, 27) in the direction of the blade tip (11) and a portion (17) protruding into the housing interior space (25, 27).

11. Device according to Claim 9 and Claim 10,
**characterized in that**
there is at least one cooling fluid circuit leading through the housing interior space (25, 27) and connected to the heat sink.

12. Device according to Claim 10 or Claim 11,
**characterized in that**
the housing interior space (25, 27) is encapsulated in the direction of the turbine blade with the aid of an elastic membrane, the membrane being fixedly connected to the clamping elements (13) and the clamping elements (13) being divided into the portion (15, 19) protruding from the housing interior space (25, 27) in the direction of the blade tip (11) and the portion (17) protruding into the housing interior space (25, 27), all of the movable parts of the clamping elements (13) being located in the portion of the clamping elements that protrudes into the housing interior space (25, 27).

13. Device according to one of Claims 1 to 12,
**characterized in that**
there is both a clamping structure (1) for pressing against the suction side (5) of the peripheral surface and a clamping structure (3) for pressing against the pressure side (7) of the peripheral surface, each of the movable clamping structures (1, 3) having a plurality of clamping elements (13), which are respectively individually mounted in a movable manner, in such a way that they can be moved at least in the direction toward and away from the peripheral surface of a turbine blade (9) to be clamped.

## Revendications

1. Dispositif de blocage d'une aube (9) de turbine ayant une surface périphérique comportant un extrados (5) et un intrados (7), ainsi qu'ayant une pointe d'aube pendant une réparation par soudure de la pointe (11) de l'aube, le dispositif ayant au moins une structure (1, 3) mobile de serrage à presser sur l'extrados (5) ou sur l'intrados (7) d'une aube (9) de turbine dans la partie de sa pointe (11) d'aube, la structure (1, 3) de serrage étant constituée pour évacuer de la chaleur de l'aube (9) de turbine et, dans lequel
la au moins une structure (1, 3) mobile de serrage a une pluralité d'éléments (13) de serrage, qui sont montés chacun individuellement mobiles de manière à pouvoir aller au moins dans la direction de la surface périphérique d'une aube (9) de turbine à bloquer et à s'en éloigner,
**caractérisé en ce que**
chacun des éléments (13) de serrage est monté mobile au moins dans deux degrés de liberté en rotation.

2. Dispositif suivant la revendication 1,
**caractérisé en ce que**
il y a un dispositif (41, 43) de pression pour appliquer une pression d'application pour presser la au moins une structure (1, 3) mobile de serrage sur la surface périphérique de l'aube (9) de turbine.

3. Dispositif suivant la revendication 2,
**caractérisé en ce que**
le dispositif de pression a, pour appliquer la pression d'application, un ou plusieurs ressorts (41) agissant sur les éléments (13) de serrage.

4. Dispositif suivant la revendication 2,
**caractérisé en ce que**
le dispositif de pression comprend un entraînement pour appliquer la pression d'application.

5. Dispositif suivant la revendication 4,
**caractérisé en ce que**
l'entraînement de chaque élément (13) de serrage comporte son propre actionneur (43) pour déplacer l'élément (13) de serrage correspondant.

6. Dispositif suivant la revendication 5,
**caractérisé en ce que**
l'entraînement est un entraînement hydraulique ou pneumatique, dans lequel à chaque élément (13) de serrage est associé son propre actionneur (43) hydraulique ou pneumatique.

7. Dispositif suivant la revendication 5,
**caractérisé en ce que**
l'entraînement est un entraînement électrique, dans lequel à chaque élément (13) de serrage est associé son propre actionneur électromécanique.

8. Dispositif suivant l'une des revendications 1 à 7,
**caractérisé en ce que**
les éléments (13) de serrage sont en un matériau dont la conductibilité thermique est plus grande que celle du matériau dont est constituée la surface périphérique de l'aube (9) de turbine.

9. Dispositif suivant l'une des revendications 1 à 8,
**caractérisé en ce que**
les éléments (13) de serrage sont reliés à un puits de chaleur.

10. Dispositif suivant l'une des revendications 1 à 9,
**caractérisé en ce qu'**
il comprend au moins une enveloppe (21, 23) dont l'intérieur (25, 27) est constitué pour qu'il y passe un fluide de refroidissement, une entrée (29, 31) pour du fluide de refroidissement et une sortie (33, 35) pour du fluide de refroidissement et **en ce que** les éléments (13) de serrage ont une partie (15, 19) sortant de l'intérieur (25, 27) de l'enveloppe en direction de la pointe (11) de l'aube et une partie (17) pénétrant à l'intérieur 25, 27) de l'enveloppe.

11. Dispositif suivant la revendication 9 et la revendication 10,
**caractérisé en ce qu'**
il y a au moins un circuit de fluide de refroidissement passant à l'intérieur (25, 27) de l'enveloppe et communiquant avec le puits de chaleur.

12. Dispositif suivant la revendication 10 ou la revendication 11,
**caractérisé en ce que**
l'intérieur (25,27) de l'enveloppe est encapsulé en direction de l'aube de turbine à l'aide d'une membrane élastique, la membrane étant reliée fixement aux éléments (13) de serrage et les éléments (13) de serrage étant subdivisés en la partie (15, 19) sortant de l'intérieur (25, 27) de l'enveloppe en direction de la pointe (11) de l'aube et en la partie pénétrant à l'intérieur (25, 27) de l'enveloppe, toutes les parties mobiles des éléments (13) de serrage se trouvant dans la partie des éléments de serrage pénétrant à l'intérieur (25, 27) de l'enveloppe.

13. Dispositif suivant l'une des revendications 1 à 12, **caractérisé en ce qu'** il y a à la fois une structure (1) de serrage pour presser l'extrados (5) de la surface périphérique et une structure (3) de serrage pour presser l'intrados (7) de la surface périphérique, chacune des structures (1, 3) mobiles de serrage ayant une pluralité d'éléments (13) de serrage qui sont montés chacun individuellement de manière mobile, de façon à pouvoir être déplacés au moins dans la direction allant vers la surface périphérique d'une aube (9) de turbine à bloquer et à pouvoir en être éloignés.
